# EUROPEAN PATENT APPLICATION

(11) **EP 1 860 404 A1**
(43) Date of publication of application: **28.11.2007**
(21) Application number: 06300504.5
(22) Date of filing: 22.05.2006
(51) Int. Cl.: G01C 21/36, G01S 1/00, H01Q 3/24

(54) **GPS Product**

(71) Applicant: Thomson Licensing, 92100 Boulogne (FR)
(72) Inventor: Lit, Yuen Shing, Hong Kong (CN); Maillard, Alain, Hong Kong (CN); Lam, Eric King Wai, Science Park, Shatin Hong Kong (CN); Tsui, Tak Wai, Hong Kong Science Park Shatin Hong Kong (CN)
(74) Representative: Rossmanith, Manfred

(57) **Abstract**

A GPS product comprises an enclosure for accommodating therein a global positioning system (GPS) receiver for receiving GPS signal from at least one satellite, a display (LCD) for displaying images on a screen, a main control unit (MCU) and a first GPS antenna system located in a first orientation, characterized in that at least another one GPS antenna system is provided on the GPS product in a second orientation that is different to the first orientation of the first GPS antenna system, a sensor for determining the orientation of the GPS product, whereby one of the first GPS antenna system and the at least another one GPS antenna system is selected in use based on received signal quality detected while the orientation of the GPS product changes, and the orientation of the image displayed on the screen of the display is changed based on the orientation of the GPS product changes.

## Description

### FIELD OF THE INVENTION

The present invention relates to a GPS product.

### BACKGROUND OF THE INVENTION

GPS products nowadays are commonly used in either portrait or landscape orientation. For instance, when the consumer uses the navigation mode or tracking mode, he would prefer a screen which is adjustable to be in either portrait or landscape mode. It is because he would like to farther or wider the overview on the map from time to time. When a consumer searches for a particular point of interest (POI), he would prefer to have a screen in portrait orientation. The reason is that with the portrait orientation, the consumer will be able to see a longer list of POI with more searching results displayed on the screen.

However, none of conventional GPS product is designed to be alternately workable in both orientations. Due to the problem of the signal reception from the satellites are obviously influenced by the orientation of the antenna system of the GPS product, their designs do not allow consumers to select freely on their own a particular antenna orientation according to the consumers' choice and the applications' need for the orientation of the display screen, which causes inconvenient to the customers.

Therefore, it is desirable to develop an improved GPS product to overcome the afore-mentioned drawbacks.

### SUMMARY OF THE INVENTION

According to the present invention, a GPS product is provided and comprises an enclosure for accommodating therein a global positioning system (GPS) receiver for receiving GPS signal from at least one satellite, a display for displaying images on a screen, a main control unit (MCU) and a first GPS antenna system located in a first orientation, characterized in that
- at least another one GPS antenna system is provided on the GPS product in a second orientation that is different to the first orientation of the first GPS antenna system;
- a sensor for determining the orientation of the GPS product; whereby
one of the first GPS antenna system and the at least another one GPS antenna system is selected in use based on received signal quality detected while the orientation of the GPS product changes; and
the orientation of the image displayed on the screen of the display is changed based on the orientation of the GPS product changes.

Advantageously, the GPS product of the present invention can be used in either portrait or landscape orientation with the screen displaying images in either portrait or landscape orientation and preferably selected one of the first antenna system and the at least another one antenna system antenna to be used to receive signal so as to ensure the quality of received signal from the satellites.

### BRIEF DESCRIPTION OF DRAWINGS

Figs. 1a and 1b are schematic views respectively showing portrait and landscape orientations of a navigation screen of a GPS product in accordance with the present invention;
Fig. 2 is a schematic view showing a portrait orientation of a POI screen of a GPS product in accordance with the present invention;
Fig. 3 is a schematic block diagram of a first embodiment for a dual antennas system for the GPS product in accordance with the present invention;
Fig. 4 is a block diagram of a second embodiment for a dual antennas system for the GPS product in accordance with the present invention;
Fig. 5 is a schematic block diagram of the GPS product employing the dual antennas system of the first embodiment as shown in Fig. 3;
Fig. 6 is a schematic block diagram of the GPS product employing the dual antennas system of the second embodiment as shown in Fig. 4; and
Fig. 7 is a circuit diagram of an acceleration sensor diagram.

### DETAIL DESCRIPTION OF PREFERRED EMBODIMENTS

The present invention provides a GPS product that is capable to be used in both portrait or landscape orientations with orientations of its image displayed on a screen being automatically changed according to orientation of the GPS product.

In accordance with the present invention, the GPS product comprises an enclosure, within which it contains a receiver for receiving signal of global positioning system (GPS) from at least a satellite, a display for displaying images on a screen thereof, a main control unit (MCU), an acceleration sensor and at least two GPS antenna systems. The at least two antenna systems are located in different directions inside the GPS product in order to selectively receive acceptable signal from the satellites when the GPS product is used in different orientations. According to exemplary embodiments of the present invention, two antenna systems are provided at X-axis direction and Y-axis direction of the GPS product in respective, however, it can be understood that they are given only as preferred embodiments, but not for limitation of the protection scope of the present invention.

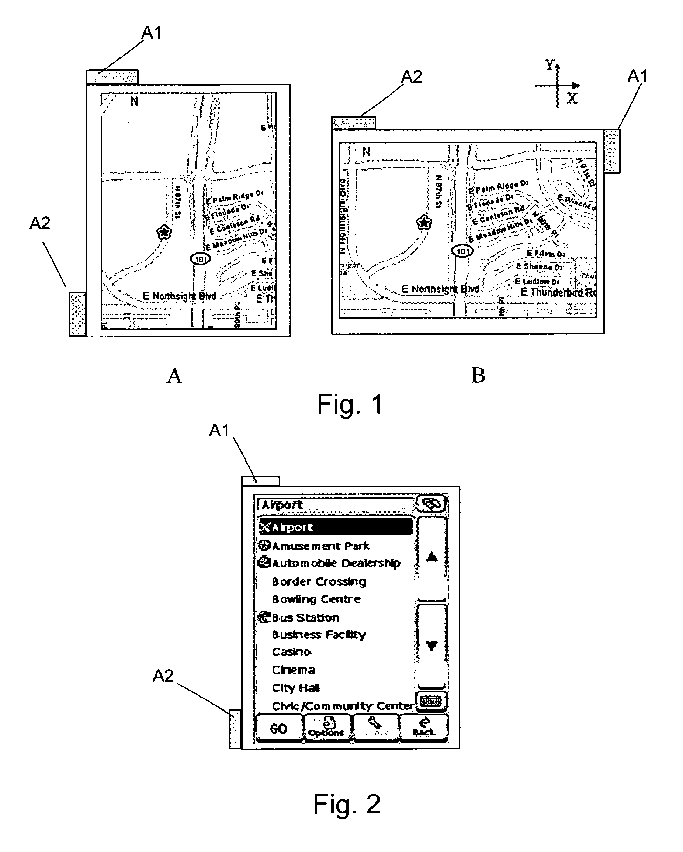

With reference to figure 1a, a screen of the display of the GPS product is schematically shown in its navigation mode in a portrait orientation. Two antenna systems A1 and A2 are respectively provided at two different sides of the GPS product in two different orientations, i.e. X-axis and Y-axis orientations. In the portrait orientation, the screen shows the image in a portrait orientation, a first antenna A1 parallel to X-axis of the product is selected in use, while a second antenna A2 parallel to Y-axis is not in use. With reference to figure 1b, the screen is shown in its navigation mode in a landscape orientation with a wider overview on the map, in which the second antenna A2 is selected in use, while the first antenna A1 is not in use. With reference to figure 2, when a user searches for a particular point of interest (POI), a POI screen as schematically shown is used in a portrait orientation since a longer list is preferred. In this mode the first antenna A1 is in use and the second antenna A2 is not in use.

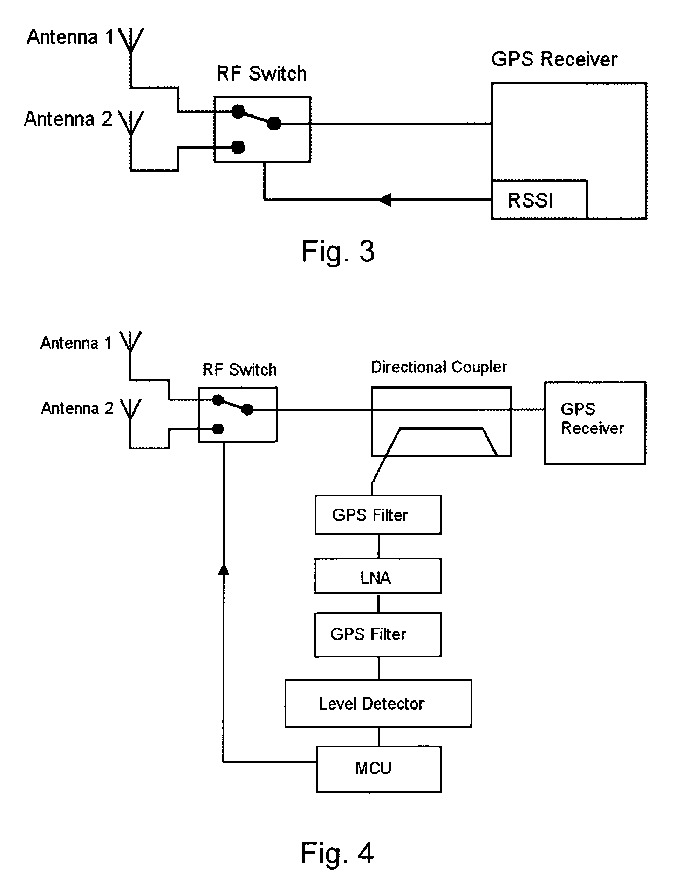

Figure 3 describes a first embodiment for a dual antennas system for the GPS product in accordance with the present invention, wherein a RSSI module is contained in the GPS receiver. Two antennas A1 and A2 electrically connect to a RF switch which is subsequently connected to the GPS receiver and controlled to selectively couple with one of the two antennas A1 and A2 based on the RSSI output. Obviously, best the antenna with best RSSI received signal is selected to be in use for the GPS product.

In accordance with a second embodiment of the present invention as shown in Figure 4, a GPS receiver without embedded RSSI module is provided, further more a directional coupler, filters, LNA, level detector and MCU are used. The directional coupler is used to couple the GPS signal received by one of the antennas. The coupled signal is then passed through the filters to ensure only the GPS signal is retrieved and amplified by the low noise amplifier (LNA). The level detector is used to determine the GPS signal level and then the corresponding information is passed to the micro-controller unit (MCU). Based on the information detected by the level detector, the MCU will check whether the GPS signal is within the acceptable reception level. If it is not in the reception level, the MCU will send the information to the RF switch and the switch will then switch to the other GPS antenna for better GPS reception.

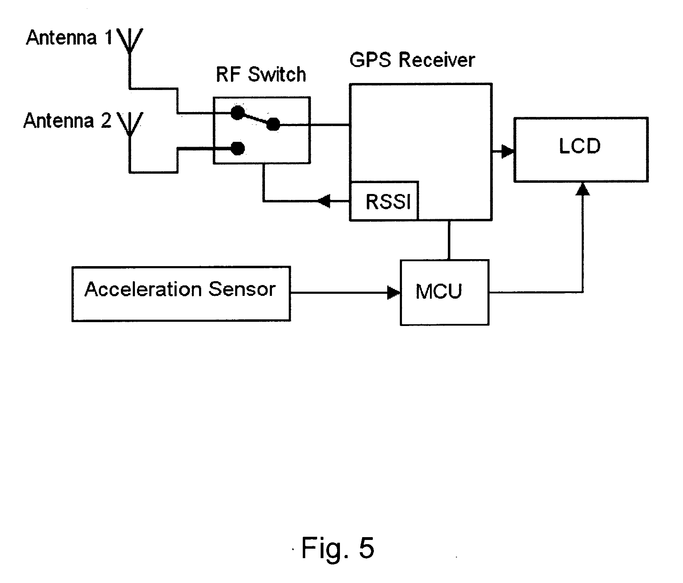

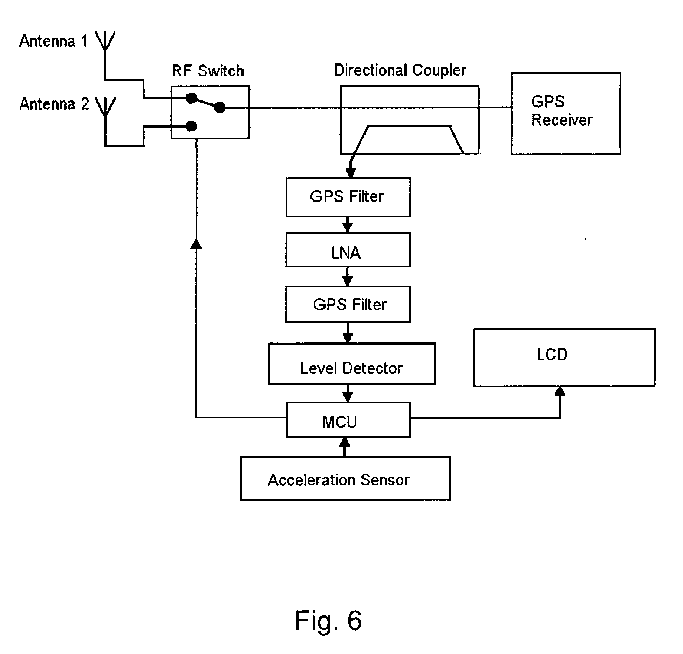

Figure 5 is a schematic block diagram of the GPS product employing the dual antennas system of the first embodiment as shown in Figure 3. Figure 6 is a schematic block diagram of the GPS product employing the dual antennas system of the second embodiment as shown in Figure 4.

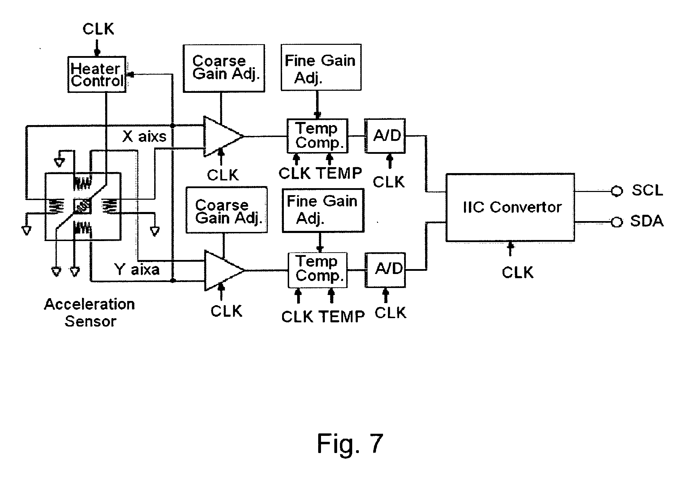

As shown in Figures 5 or 6, the block diagram for the dual antennas system is combined with an automatic screen changing or rotation feature. As one preferred embodiment, the acceleration sensor is used to detect the gravity force which will be digitized and corresponding data will be passed to MCU. An example of acceleration sensor diagram is shown in Figure 7. Based on the data from acceleration sensor, the MCU will check the orientation of GPS product by data values of X-axis and Y-axis.

The MCU will then control the change of the orientation of the LCD screen automatically based on the result of determined data in X-axis and Y-axis output from the sensor. For instance, if the gravity force is applied on X-axis, it means the GPS unit in portrait orientation. Similarly, force applied on Y-axis represented landscape orientation. Therefore, the image displayed on screen of the display is changeable according to the orientation of the GPS product, which is obviously synchronized with the switching or selection of the antennas.

Because the dual antennas are located in different orientations inside the GPS product, good reception of GPS signal from satellites is ensured when the GPS product is used in either portrait or landscape orientation, and thus the inventive GPS product enables one to use it in either portrait or landscape orientation with losing signal strength or suffering bad signal.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A GPS product comprising an enclosure for accommodating therein a global positioning system (GPS) receiver for receiving GPS signal from at least one satellite, a display for displaying images on a screen, a main control unit (MCU) and a first GPS antenna system located in a first orientation, **characterized in that**
- at least another one GPS antenna system is provided on the GPS product in a second orientation that is different to the first orientation of the first GPS antenna system;
- a sensor for determining the orientation of the GPS product; whereby
one of the first GPS antenna system and the at least another one GPS antenna system is selected in use based on received signal quality detected while the orientation of the GPS product changes; and
the orientation of the image displayed on the screen of the display is changed based on the orientation of the GPS product changes.
